# EUROPEAN PATENT SPECIFICATION

(11) **EP 2 940 994 B1**
(45) Date of publication and mention of the grant of the patent: **20.11.2019**
(21) Application number: 15163287.4
(22) Date of filing: 10.04.2015
(51) Int. Cl.: H04N 7/18, H04N 21/2365, H04N 19/164

(54) **SYSTEM AND METHOD OF OPTIMIZED NETWORK TRAFFIC IN VIDEO SURVEILLANCE SYSTEM**
SYSTEM UND VERFAHREN FÜR OPTIMIERTEN NETZWERKVERKEHR IN EINEM VIDEOÜBERWACHUNGSSYSTEM
SYSTÈME ET PROCÉDÉ DE TRAFIC DE RÉSEAU OPTIMISÉ DANS UN SYSTÈME DE SURVEILLANCE VIDÉO

(30) Priority: 28.04.2014 US 201414263454
(43) Date of publication of application: 04.11.2015
(73) Proprietor: Honeywell International Inc., Morris Plains, NJ 07950 (US)
(72) Inventor: ZHUANG, Hanwei, Morristown, NJ 07962-2245 (US); JI, Xieyuan, Morristown, NJ 07962-2245 (US); JIAO, Hongguang, Morristown, NJ 07962-2245 (US); ZHOU, Haijin, Morristown, NJ 07962-2245 (US)
(74) Representative: Houghton, Mark Phillip

(56) References cited:
- EP-A1- 1 670 209
- US-A1- 2009 141 800
- US-A1- 2011 169 952

## Description

### FIELD

The field is directed to security systems and more particularly to video surveillance systems.

### BACKGROUND

Systems are known to provide security within homes, businesses or factories. Security in this case means the detection of threats to the safety of human occupants and/or assets within the secured area.

Threats may be posed from any of a number of different events, such as fire, natural gas, intruders, etc. In order to mitigate the potential damage caused by such threats, it is important to detect threats as early as possible.

Threats may be detected using any of a number of different technologies. For example, some systems are based entirely upon the use of limit switches placed on the doors and windows of homes and business in order to detect intruders.
Alternatively, a number of fire and/or gas detectors may be distributed throughout the area for detecting fires.

While devices for the detection of threats are effective is many cases, they cannot be used in all applications, particularly where large numbers of people are present. In such cases, security may be supplemented with or substantially replaced with one or more surveillance cameras.

The one or more surveillance cameras may be coupled to a corresponding set of security monitors or displays at a guard station. In this case, a human guard may constantly monitor the displays for indications of threats.

While limit switches on the doors and windows of buildings are useful in detecting some threats, they are not always effective in detecting others. For example, a guard viewing video can detect many threats that cannot be detected by limit switches or fire detectors. Accordingly, a need exists for better methods of collecting and presenting video information to guard personnel of security systems.

The present invention provides a system as defined in claim 1. The system may include the features of any one or more of dependent claims 2 to 8.

### BRIEF DESCRIPTION OF THE DRAWINGS

Fig. 1 illustrates a block diagram of a security system in accordance herewith; and
FIG. 2 is a block diagram of a surveillance system of the security system.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

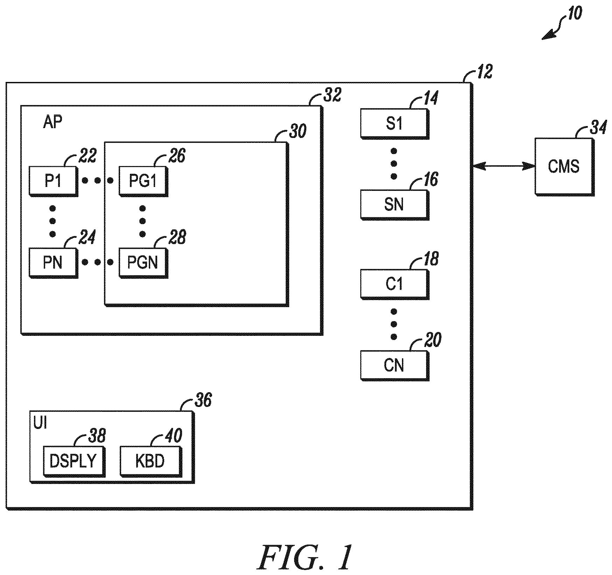

FIG. 1 is a block diagram of a security system 10 shown generally in accordance with an illustrated embodiment. Included within the security system may be one or more sensors 14, 16 that detect threats within a secured area 12.

The sensors may be embodied as limit switches on doors and/or windows that provide access into or egress from the secured area. Alternatively, the sensors may be embodied as one or more fire detectors.

Also included within the secured area are a number of cameras 18, 20. The cameras may be located along a periphery or scattered throughout the interior of the secured area.

The sensors and cameras may be monitored by operation of a control panel 32 either located within the secured area (as shown in FIG. 1) or located remotely. Upon detection of a threat via the monitoring, the alarm panel may compose and send an alarm message to a central monitoring station 34.

Included within the alarm panel and at least some of the cameras is one or more processor apparatus (processors) 22, 24, each operating under control of one or more computer programs 26, 28 loaded from a non-transitory computer readable medium (memory) 30. As used herein, reference to a step of a computer program is also reference to the processor that executed that step.

A user interface 36 associated with the secured area may be provided and used by authorized persons to control the security system. The user interface includes at least a touchscreen display 38. Alternatively, the display may be conventional and be used in conjunction with a keyboard 40 for control of the security system.

A graphical user interface (GUI) processor within the alarm panel may provide an interface between the guard and a number of function processors within the alarm panel through the display. For example, various functions of the security system may be represented by an associated icon shown on the display. To activate the associated function, the guard may simply activate the icon associated with the function.

For example, the display may be used by a human guard for viewing video from the video cameras. In this regard, the display may include a screen including the icons of one or more of the cameras. The guard may activate the icon associated with each camera that the guard wants to activate. In response, the icon processor may activate a video processor associated with the icon. The video processor may recover video from the selected camera and display a sequence of video frames in a window shown on the display.

Each of the cameras may forward compressed video to the control panel using a number of different picture types including I-frames, P-frames and B-frames. I-frames are the least compressible but don't require other video frames to decode. P-frames can use data from previous frames to decompress and are more compressible than I-frames. B-Frames can use previous and subsequent frames for data reference and can provide the greatest amount of data compression. Stated in another way, an I-frame in an "intra-coded picture" and, in effect, is a fully specified picture, like a conventional static image file. P-frames and B-frames contain only part of the image information, so they need less space to store (and transmit) than an I-frame and thus improve the video compression rate.

In general, as the state of the art in surveillance systems has evolved, the trend in the industry has been to use more and more high-definition network cameras which require a high networking bandwidth. However, network cameras have very large I-frames and relatively small P-frames, so network traffic is inherently uneven.

If an event occurs within the surveillance system and a burst of I-frames arrives at a processing system (e.g., a VMS processing system) within some short time period, then the system may be overwhelmed. Systems that use power over Ethernet (POE) cameras are especially susceptible to this situation when an associated Ethernet switch is rebooted. This can also occur when power is lost and an associated VMS processing system is restarted. In either case, events such as these will cause significant networking device loading following each event. Overloading of the video system can cause video jitter, corruption of video frames, lost frames and/or increased video latency.

Described below is a video processing system that solves these problems. The video processing system monitors the I-frames through the use of a traffic optimizer. If there is an I-frame lost or the I-frames exceed a threshold value, then the processing system will notify at least a first one of the cameras to adjust its I-frame generating time.

The video processing system may also adjust the other cameras that issue I-frames following the overload during a random time period (e.g., less than the interval between 2 subsequent I-frames of the first camera). The system may then observe the results after the I-frames are regenerated.

The cameras may also include an I-frame synch function. If the density of I-frames during any given time period exceeds a threshold value, then the processing system sends an I-frame synchronization command to one or more cameras. The cameras respond by regenerating an I-frame sequence to reduce the burst of I-frames.

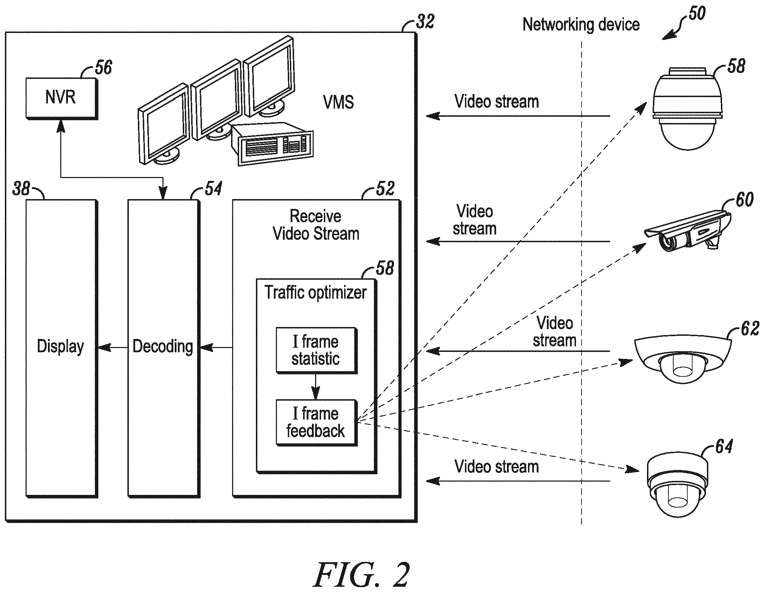

FIG. 2 is a simplified block diagram of a surveillance system 50 that operates from within the alarm panel. The surveillance system may be incorporated into or form a separate portion of the security system. It should be noted that the two cameras of FIG. 1 have been expanded to include four cameras 58, 60, 62, 64 in FIG. 2 for ease of reference.

Included within the surveillance system is a receive video stream controller (receive controller) 52, a decoding controller 54, a network video recorder (NVR) 56 and the display 38. In this regard, the receive controller may receive packets of video frames in a compressed format, perform error checking and forward the compressed video frames to the decoding controller for decoding. Decoded video from each camera may be saved in the NVR on a continuous basis. Decoded video may also be forwarded to the display.

While the compression and transmission of compressed video can significantly improve the bandwidth of a surveillance system, it can also cause stability problems in transmission. For example, upon start-up, each of the cameras must transmit an I-frame in order to create a reference image for decoding subsequent P-frames and B-frames. However, if a number of I-frame arrives at the receive controller concurrently (i.e., within a very short time period), then the later arriving I-frame(s) may be corrupted or may be lost, depending upon the buffering capabilities of the controller.

In order to solve the problem of concurrently arriving I-frames, the surveillance system includes a traffic optimizer 58. The traffic optimizer includes a number of processors that detect the concurrent arrival of I-frames and respond by either resetting the I-frame transmission time of one or more of the video cameras or by adjusting a time interval of the I-frames from the camera. Inasmuch as the I-frame is transmitted as infrequently as possible to preserve data integrity, the adjustment of the time interval of the I-frame from the camera will, in most cases, involve the shortening of the time interval between I-frames from any one camera on a one-time basis in order to offset the I-frames among the various cameras.

In general, the adjustment of I-frames may include the use of one or more threshold values. In a first instance, the threshold may be based upon the processing capability of the decoding controller and upon a buffering capability of the receive controller. For example, if the decoding controller can only handle one I-frame per time period and the receive controller can only buffer one frame, then the arrival of a third I-frame within the time period may cause an overload processor to send a reset signal to the camera that originated that third I-frame.

Alternatively, two I-frames may arrive simultaneously at the receive controller. In this case, the overload processor may send a reset to one camera if the I-frame from the other camera can be decoded, or send reset signals to both cameras.

In some cases, different cameras within the surveillance system may be operating with different time intervals between I-frames. This may be because the different cameras have different levels of activity within the field of view of each camera and may require more frequent reference frames. In this case, a tracking processor may track the frequency of I-frames from each camera and anticipate the concurrent arrival of more than one I-frame within some defined time period. In this case, the threshold may be based upon the arrival of two or more I-frames within some predetermined time value. Upon anticipating this situation, a correction processor may randomly generate some time offset that is transmitted to one or more cameras to offset the I-frames before the impending time interval of concurrence.

In general, the system includes a surveillance system that receives compressed video from a plurality of network video cameras and a traffic control subsystem of the surveillance system. The traffic control subsystem further includes a first processor of the subsystem that monitors for and detects the number of I-frames per time period received from each of the plurality of video cameras, a second processor of the subsystem that compares the number of received I-frames with a threshold value and detects that one of the plurality of network cameras has exceeded the threshold value and a third processor that sends a control message to the one of the plurality of network cameras adjusting a time interval of I-frames from the one camera based upon the comparison.

In another embodiment, the system includes a surveillance system that receives compressed video from a plurality of network video cameras and a traffic control subsystem of the surveillance system. The traffic control subsystem further includes a first processor of the subsystem that monitors for and detects a concurrence of arrival of a number of I-frames within a time period from the plurality of video cameras, a second processor of the subsystem that compares the number of received I-frames with a threshold value and detects that the number of I-Frames from the plurality of network cameras has exceeded the threshold value and a third processor that sends a control message to at least one of the plurality of network cameras adjusting a time of transmission of I-frames from the at least one camera based upon the comparison.

In still another embodiment, the system includes a surveillance system, a plurality of network cameras that transmit I-frames of compressed video to the surveillance system, a first processor of the surveillance system that monitors for and detects a concurrence of arrival of a number of I-frames within a time period from the plurality of video cameras, a second processor of the surveillance system that compares the number of received I-frames with a threshold value and detects that the number of I-Frames from the plurality of network cameras has exceeded the threshold value and a third processor that sends a control message to at least one of the plurality of network cameras adjusting a time of transmission of I-frames from the at least one camera based upon the comparison.

From the foregoing, it will be observed that numerous variations and modifications may be effected without departing from the scope hereof. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. A system comprising:
a surveillance system that receives compressed video from a plurality of network video cameras; and
a traffic control subsystem of the surveillance system further comprising:
a first processor of the subsystem that monitors for and detects the number of I-frames per time period received from each of the plurality of video cameras;
a second processor of the subsystem that compares the number of received I-frames with a threshold value and detects that one of the plurality of network cameras has exceeded the threshold value; and
a third processor that sends a control message to the one of the plurality of network cameras adjusting a time interval of I-frames from the one camera based upon the comparison wherein exceeding the threshold includes detecting the concurrent arrival of I-frames and responding includes either resetting the I-frame transmission time of one or more of the video cameras or by adjusting a time interval of the I-frames from the camera.

2. The system as in claim 1 further comprising a processor that changes a time of transmission of I-frames from the one camera with respect to at least one other camera of the plurality of cameras.

3. The system as in claim 2 further comprising a processor that randomly generates a time interval for adjusting the transmission time of I-frames from the one network camera.

4. The system as in claim 1 further comprising the third processor adjusting the time interval of the one network camera by sending a reset to the one network camera.

5. The system as in claim 1 wherein the first and second processor further comprises a processor that tracks an I-frame interval for each of the plurality of network cameras.

6. The system as in claim 5 further comprising a processor that predicts the number of I-frames per time interval based upon the tracked I-frame intervals.

7. The system as in claim 1 wherein the threshold value comprises a value equal to a minimum time required by the surveillance system for processing each I-frame times and wherein the threshold value is exceeded when two or more I-frames are received within a time period that is less than the value.

8. The system as in claim 1 wherein the threshold value comprises a maximum average number of 1-frames that the surveillance system can receive and process per time period from the plurality of network cameras.

## Patentansprüche

1. System, das Folgendes umfasst:
ein Überwachungssystem, das komprimiertes Video von mehreren Netzvideokameras empfängt; und
ein Verkehrssteuerungsuntersystem des Überwachungssystems, das ferner Folgendes umfasst:
einen ersten Prozessor des Untersystems, der die Anzahl von I-Rahmen pro Zeitraum, die von jeder der mehreren Videokameras empfangen werden, überwacht und detektiert;
einen zweiten Prozessor des Untersystems, der die Anzahl empfangener I-Rahmen mit einem Schwellenwert vergleicht und detektiert, dass eine der mehreren Netzkameras den Schwellenwert überschritten hat; und
einen dritten Prozessor, der eine Steuernachricht zu der einen der mehreren Netzkameras sendet, die ein Zeitintervall von I-Rahmen von der einen Kamera auf der Grundlage des Vergleichs anpasst, wobei ein Überschreiten des Schwellenwerts ein Detektieren der gleichzeitigen Ankunft von I-Rahmen enthält und ein Antworten entweder ein Zurücksetzen der I-Rahmensendezeit einer oder mehrerer Videokameras oder ein Anpassen eines Zeitintervalls der I-Rahmen von der Kamera enthält.

2. System nach Anspruch 1, das ferner einen Prozessor umfasst, der eine Übertragungszeit von I-Rahmen von der einen Kamera in Bezug auf mindestens eine weitere Kamera der mehreren Kameras ändert.

3. System nach Anspruch 2, das ferner einen Prozessor umfasst, der ein Zeitintervall zum Anpassen der Sendezeit von I-Rahmen von der einen Netzkamera zufällig erzeugt.

4. System nach Anspruch 1, das ferner umfasst, dass der dritte Prozessor das Zeitintervall der einen Netzkamera durch Senden eines Rücksetzens zur einen Netzkamera anpasst.

5. System nach Anspruch 1, wobei der erste und der zweite Prozessor ferner einen Prozessor umfassen, der ein I-Rahmenintervall für jede der mehreren Netzkameras verfolgt.

6. System nach Anspruch 5, das ferner einen Prozessor umfasst, der die Anzahl von I-Rahmen pro Zeitintervall auf der Grundlage der verfolgten I-Rahmenintervalle vorhersagt.

7. System nach Anspruch 1, wobei der Schwellenwert einen Wert umfasst, der gleich einer Mindestzeit ist, die durch das Überwachungssystem benötigt wird, um jede I-Rahmenzeit zu verarbeiten, und der Schwellenwert überschritten wird, wenn zwei oder mehr I-Rahmen in einem Zeitraum empfangen werden, der kleiner als der Wert ist.

8. System nach Anspruch 1, wobei der Schwellenwert eine Höchstdurchschnittsanzahl von I-Rahmen umfasst, die das Überwachungssystem pro Zeitraum von den mehreren Netzkameras empfangen und verarbeiten kann.

## Revendications

1. Système, comprenant :
un système de surveillance qui reçoit de la vidéo compressée en provenance d'une pluralité de caméras vidéo en réseau ; et
un sous-système de commande de trafic du système de surveillance comprenant en outre :
un premier processeur du sous-système qui scrute et détecte le nombre d'images I par période de temps reçues en provenance de chacune de la pluralité de caméras vidéo ;
un deuxième processeur du sous-système qui compare le nombre d'images I reçues à une valeur seuil et détecte que l'une de la pluralité de caméras en réseau a dépassé la valeur seuil ; et
un troisième processeur qui envoie un message de commande à ladite une de la pluralité de caméras en réseau ajustant un intervalle de temps d'images I en provenance de ladite une caméra sur la base de la comparaison, le dépassement de la valeur seuil comportant la détection de l'arrivée concomitante d'images I et la réponse comportant soit la réinitialisation du temps de transmission d'images I d'une ou de plusieurs des caméras vidéo, soit l'ajustement d'un intervalle de temps des images I en provenance de la caméra.

2. Système selon la revendication 1, comprenant en outre un processeur qui modifie un temps de transmission d'images I en provenance de ladite une caméra par rapport à au moins une autre caméra de la pluralité de caméras.

3. Système selon la revendication 2, comprenant en outre un processeur qui génère aléatoirement un intervalle de temps pour l'ajustement du temps de transmission d'images I en provenance de ladite une caméra en réseau.

4. Système selon la revendication 1, comprenant en outre le troisième processeur qui ajuste l'intervalle de temps de ladite une caméra en réseau en envoyant une réinitialisation à ladite une caméra en réseau.

5. Système selon la revendication 1, dans lequel les premier et deuxième processeur comprennent en outre un processeur qui assure le suivi d'un intervalle d'images I pour chacune de la pluralité de caméras en réseau.

6. Système selon la revendication 5, comprenant en outre un processeur qui prédit le nombre d'images I par intervalle de temps sur la base des intervalles d'images I suivis.

7. Système selon la revendication 1, dans lequel la valeur seuil comprend une valeur égale à un temps minimal nécessaire au système de surveillance pour traiter chaque temps d'images I, et dans lequel la valeur seuil est dépassée lorsqu'au moins deux images I sont reçues au sein d'une période de temps inférieure à la valeur.

8. Système selon la revendication 1, dans lequel la valeur seuil comprend un nombre maximal moyen d'images I que le système de surveillance est apte à recevoir et traiter par période de temps en provenance de la pluralité de caméras en réseau.
